# EUROPEAN PATENT APPLICATION

(11) **EP 2 298 442 A1**
(43) Date of publication of application: **23.03.2011**
(21) Application number: 09758378.5
(22) Date of filing: 04.06.2009
(51) Int. Cl.: B01J 21/18, B01J 23/75, B01J 37/08, H01M 4/88, H01M 4/90

(54) **CATALYST AND METHOD FOR PRODUCING THE SAME, MEMBRANE ELECTRODE ASSEMBLY AND METHOD FOR PRODUCING THE SAME, FUEL CELL MEMBER AND METHOD FOR PRODUCING THE SAME, FUEL CELL, AND ELECTRICITY STORAGE DEVICE**

(30) Priority: 05.06.2008 JP 2008148387
(71) Applicant: Miyata, Seizo, Nishitokyo-shi, Tokyo 202-0004 (JP); National University Corporation Gunma University, Maebashi-shi, Gunma 371-8510 (JP); Nisshinbo Holdings, Inc., Nihonbashi Chuo-ku Tokyo 103-8650 (JP)
(72) Inventor: OZAKI Jun-ichi, Kiryu-shi Gunma 376-0052 (JP); SAITO Kazuo, Chiba-shi Chiba 267-0056 (JP); MORIYA Shogo, Chiba-shi Chiba 267-0056 (JP); IIDA Kyosuke, Chiba-shi Chiba 267-0056 (JP); KISHIMOTO Takeaki, Chiba-shi Chiba 267-0056 (JP)
(74) Representative: Betten & Resch
(86) International application number: PCT/JP2009/060233
(87) International publication number: WO 2009/148111

(57) **Abstract**

The present invention is made to integrate a catalyst and other component(s) to be combined with the catalyst to reduce the number of components, and to reduce contact resistance of the integrated components.

A configuration is formed in which a conductive region is provided in at least a portion of a base 3, and a carbon catalyst 2 is formed in the conductive region. The configuration is formed by attaching a carbon precursor polymer to the base and carbonizing the carbon precursor polymer.

## Description

### Technical Field

The present invention relates to a catalyst using a carbon catalyst carrying no noble metal, such as platinum, platinum-alloy and the like, and a method for producing the same, a membrane electrode assembly and a method for producing the same, a fuel cell member and a method for producing the same, a polymer electrolyte fuel cell, and an electricity storage device.

### Background Art

As one of the important solutions to global warming problem and environmental pollution problem, practical use of high-efficiency and pollution-free fuel cell has been attracting much attention. The fuel cell is a kind of chemical cell in which fuel (such as hydrogen or the like) and oxidant (such as oxygen or the like) are supplied to generate electricity. In a most common fuel cell, electricity is generated by using, for example, reverse reaction of the electrolysis of water, i.e., the following reaction:

2H₂ + O₂ → 2H₂O

The fuel cell can be classified into several types according to the kind of electrochemical reaction, electrolyte and/or the like. Examples of the types of the fuel cell include: polymer electrolyte fuel cell, alkali electrolyte fuel cell, phosphoric-acid fuel cell, solid-oxide fuel cell, biofuel cell and the like. Among these types, the polymer electrolyte fuel cell is particularly expected to be applied to mobile device, fuel-cell vehicle and the like because it can be operated at room temperature and because it can be easily made small in size and light in weight.

The basic structure of the polymer electrolyte fuel cell is a single cell which is configured by sandwiching a basic component called a "membrane electrode assembly (MEA)" between two conductive plates each having a reaction gas supply path formed therein, wherein the membrane electrode assembly is an integrated body formed by bonding a fuel electrode (i.e., a negative electrode), a solid polymer membrane (i.e., an electrolyte) and an air electrode (i.e., a positive electrode). High voltage can be obtained by laminating the single cells to connect the single cells in series with each other. In the case where the single cells are laminated, the conductive plates have function as separators.

Nowadays, in order to improve reactivity of, for example, ionization reaction of water, two gas diffusion electrodes are provided respectively as the negative electrode and positive electrode, and a carbon carrying a catalyst such as platinum, a platinum compound and/or the like is used on the side of a solid electrolyte. Thus, the polymer electrolyte fuel cell is configured by joining the catalyst layer, the gas diffusion electrodes, and the separators to each other with the solid electrolyte sandwiched in between (see, for example, Patent Documents 1 to 3).

According to the patent document 1-3, as shown in FIG. 15, the conventional ordinary fuel cell has a solid electrolyte 111, a catalyst layer 102, a gas diffusion electrode 103 and a separator 106, wherein the catalyst layer 102 is formed of, for example, carbon particles carrying catalyst metal such as platinum and/or the like. Similarly, although not shown, the conventional ordinary fuel cell also has a catalyst carrying catalyst metal, a gas diffusion electrode and a separator arranged in this order on the other side of the solid electrolyte 111.

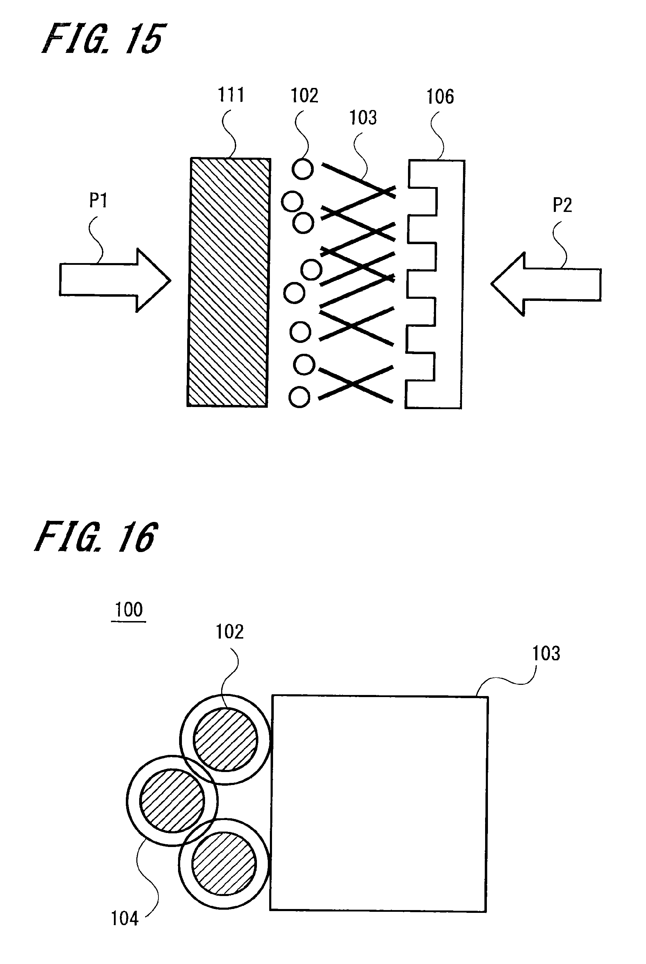

The method for producing such fuel cell includes the following steps. First, a slurry is produced on a solid electrolyte membrane. The slurry is produced by mixing the catalyst (which is formed of carbon particles carrying electrode catalyst such as platinum and/or the like) and a solid electrolyte solution (which also serve as a binder for binding the catalyst) with each other. Thereafter, the slurry is coated on the solid electrolyte 111, and the coated slurry is dried. On the other hand, the gas diffusion electrode 103 and the solid electrolyte 111, on which the catalyst layer 102 is coated, are joined to each other by pressing the components from both sides (as indicated by open arrows P1 and P2 shown in FIG. 15) by hot pressing. Carbon cloth, carbon paper, metallic foam, metallic fiber paper or the like can be used as the gas diffusion electrode 103. At this time, in order to efficiently discharge the water generated while performing electricity generation, a gas diffusion electrode subjected to a water repellency treatment with fluorine resin, for example, is used as the gas diffusion electrode 103.

### [Prior art document]

### [Patent document]

[Patent Document 1] Japanese Unexamined Patent Application Publication No. 8-7897
[Patent Document 2] Japanese Unexamined Patent Application Publication No. 2004-185900
[Patent Document 3] Japanese Unexamined Patent Application Publication No. 2007-134254

### Disclosure of the Invention

### Problems to be Solved by the Invention

As described above, in the conventional fuel cell, the interface between the catalyst layer and the gas diffusion electrode and the interface between the gas diffusion electrode and the separator are formed by contacting these components to each other, press-contacting these components to each other, or the like, and therefore have high contact resistance. Such configuration is shown in FIG. 16. As shown in FIG. 16, the catalyst layer 102 (which is formed of the carbon particles carrying catalyst (not shown in the drawing) such as platinum and/or the like) is adhered on one surface of the gas diffusion electrode 103 (which is formed of carbon fiber, carbon paper or the like). A binder 104 formed of a solid polyelectrolyte or the like may be formed on the surface of each of the carbon particles the catalyst layer 102 or formed in the space between the carbon particles. In such a case, due to the catalyst such as platinum carried on the surface of the carbon particles (not shown in the drawing), the reaction is accelerated and hydrogen is ionized, so that electrons is detached, and the detached electron travels to the gas diffusion electrode 103 through the carbon particles of the catalyst layer 102. In such case, although the catalyst and the gas diffusion electrode are press-contacted to each other, the contact between the catalyst layer 102 and the gas diffusion electrode 103 is mere a point contact which contains the binder 104 component. Thus, the contact resistance in this portion can not be ignored, i.e., due to the resistance caused by the point contact, loss is caused to the electron generated in the fuel cell. Such loss will adversely affect the power generation characteristics of the fuel cell. Further, since such configuration includes large number of components, there arise problems such as high cost, low productivity and the like.

For example, in the fuel cell disclosed in Patent Document 3, although the solid electrolyte, the catalyst and the gas diffusion electrode are integrated by the binder, electrically only a conductive path is formed by the contact between the components, and therefore it is not a radical solution to the problems.
In other words, in the conventional fuel cell, electrical conductivity between the catalyst layer, the gas diffusion electrode and the separator is not good enough to conduct electrons, which is necessary for generating electricity, and great loss is caused due to the contact resistance.

In view of the above problems, it is an object of the present invention to reduce the number of components by integrating a catalyst and a base which holds the catalyst and combines itself with other components, as well as to reduce the contact resistance.
Further, it is another object of the present invention to use such catalyst to configure components of a fuel cell, or configure the fuel cell, and thereby improve the electrical conductivity between the catalyst and the electrode.

### Means for Solving the Problems

To solve the aforesaid problems, a catalyst according to an aspect of the present invention includes: a base having a conductive region arranged in at least a portion thereof; and a carbon catalyst formed in the conductive region.
The carbon catalyst can be widely used as a catalyst for catalyzing chemical reactions, particularly can be used as an alternative to a conventional platinum catalyst. Thus, by arranging a conductive region in at least a portion of the base and forming the carbon catalyst in the conductive region, the contact resistance between the carbon catalyst and the base is reduced.
Further, in the case where the base is formed of a conductive material, it is possible to be used as an electrode having catalyst function.
Further, in the case where a material having a structure allowing gas to pass therethrough is used as the base, in which the carbon catalyst is formed, it is possible to be preferably used as a gas diffusion electrode having catalyst function for a fuel cell, and in such a case, the electrical conductivity of the fuel cell can be improved.

Further, a method for producing a catalyst according to another aspect of the present invention includes the steps of: preparing a carbon precursor polymer; attaching the carbon precursor polymer to a conductive region of the base; and carbonizing the carbon precursor polymer.
Thus, it is possible to easily form carbon catalyst in the base by preparing the carbon precursor polymer, attaching the carbon precursor polymer to at least the conductive region of the base, and carbonizing the carbon precursor polymer. At this time, the carbon catalyst can be formed not only on the surface of the base, but can be formed in pores, or the like, in the base, depending on the shape of the base. Further, the carbon catalyst formed in such manner is strongly bonded to the base physically or chemically depending on the material of the base and conditions of the carbonization, instead of being bonded simply by contact, and thereby the carbon catalyst can be relatively strongly bonded to the base. Thus, the contact resistance can be reduced compared to the conventional arts.

A membrane electrode assembly (MEA) according to further another aspect of the present invention includes: a solid electrolyte; and a pair of gas diffusion electrodes facing each other with the solid electrolyte sandwiched therebetween, wherein each of the gas diffusion electrodes has a carbon catalyst formed in at least a part thereof.

Further, a method for producing a membrane electrode assembly according to further another aspect of the present invention includes the steps of: preparing a carbon precursor polymer; attaching the carbon precursor polymer to at least a portion of a gas diffusion electrode; carbonizing the carbon precursor polymer; and integrating a solid electrolyte and the gas diffusion electrode having the carbon catalyst formed therein.

A fuel cell member according to further another aspect of the present invention includes: a gas diffusion electrode configured by forming a carbon catalyst in at least a portion of a base; and a separator, wherein the gas diffusion electrode and the separator are integrally formed.

Further, a method for producing a fuel cell member according to further another aspect of the present invention includes the steps of: preparing a carbon precursor polymer; attaching the carbon precursor polymer to at least a portion of a base which constitutes a gas diffusion electrode; carbonizing the carbon precursor polymer so as to form a carbon catalyst; and integrating the base and a separator while leaving at least a part of the portion having the carbon precursor polymer formed therein open.

A fuel cell according to further another aspect of the present invention includes: a solid electrolyte; and a pair of gas diffusion electrodes facing each other with the solid electrolyte sandwiched therebetween, wherein a carbon catalyst is formed in each of the gas diffusion electrodes on the side where the gas diffusion electrode faces the solid electrolyte.

An electricity storage device according to further another aspect of the present invention includes: an electrode material; and an electrolyte, wherein the electrode material is provided with a carbon catalyst.

As described above, in the membrane electrode assembly, the fuel cell member, the fuel cell and the electricity storage device according to the present invention, since the carbon catalyst is formed in at least a portion of the base, or the carbon catalyst is formed in the electrode material, it is possible to reduce the number of components. When being used to the fuel cell, the contact resistance between the base and the catalyst of the gas diffusion electrode can be reduced. Thus, the electrical conductivity of the contact portion between the gas diffusion electrode and the catalyst can be improved, and therefore it is possible to provide a fuel cell having improved power generation characteristics.
Further, the number of components can be reduced, productivity can be improved, and cost can be reduced. Furthermore, since the gas diffusion electrode itself has catalyst function, it is possible to conduct the electrons generated in the catalyst without generating loss caused by the contact resistance. Thus, it is possible to improve the power generation efficiency of the fuel cell.
Further, by integrating the gas diffusion electrode having catalyst function and the separator, it is possible to conduct the electrons generated in the catalyst to the separator without generating loss caused by the contact resistance. Thus, it is possible to produce the fuel cell very efficiently.

Further, according to the method for producing the membrane electrode assembly and the method for producing the fuel cell member, the carbon catalyst can be easily formed in the gas diffusion electrode, the electrical conductivity and power generation characteristics can be improved due to reduced contact resistance between the catalyst and the gas diffusion electrode, and further, productivity can be improved.

### Advantages of the Invention

According to the present invention, it is possible to reduce the contact resistance between the catalyst and other components to be combined with the catalyst.
Further, by configuring a fuel cell component, or a fuel cell, or an electricity storage device using the catalyst according to the present invention, it is possible to improve the electrical conductivity between the catalyst and the electrode.

### Brief Description of Drawings

FIG. 1 is a view schematically showing the configuration of a first example of a catalyst according to a first embodiment of the present invention;
FIG. 2 is a view schematically showing the configuration of a second example of the catalyst according to the first embodiment of the present invention;
FIG. 3 is a view schematically showing the configuration of a third example of the catalyst according to the first embodiment of the present invention;
FIG. 4 is a view schematically showing the configuration of a fourth example of the catalyst according to the first embodiment of the present invention;
FIG. 5 is a view schematically showing the configuration of a fifth example of the catalyst according to the first embodiment of the present invention;
FIG. 6 is a view schematically showing the configuration of a sixth example of the catalyst according to the first embodiment of the present invention;
FIG. 7 is a view schematically showing the configuration of an example of a membrane electrode assembly according to a second embodiment of the present invention;
FIG. 8 is a view schematically showing the configuration of an example of a fuel cell member according to a third embodiment of the present invention;
FIG. 9 is a view schematically showing the configuration of another example of the fuel cell member according to a third embodiment of the present invention;
FIG. 10 is a view schematically showing the configuration of an example of a fuel cell according to a fourth embodiment of the present invention;
FIG. 11 is a schematic view for explaining power generation state of another example of the fuel cell according to the fourth embodiment of the present invention;
FIG. 12 is a view schematically showing the configuration of an example of an electricity storage device according to a fifth embodiment of the present invention;
FIG. 13 is a chart showing power generation characteristics of a membrane electrode assembly of Example 1 and power generation characteristics of a membrane electrode assembly of Comparative Example 1 of the present invention;
FIG. 14 is a photomicrograph of a gas diffusion electrode (catalyst) of Example 4 of the present invention;
FIG. 15 is a view schematically showing the configuration of the primary portion a conventional fuel cell; and
FIG. 16 is another view schematically showing the configuration of the primary portion the conventional fuel cell.

### Best Modes for Carrying Out the Invention

Specific embodiments of the present invention will be described below in detail. The embodiments of the present invention will be described in the following order.
[1] First Embodiment (Catalyst and Method for Producing the Same)
[2] Second Embodiment (Membrane Electrode Assembly and Method for Producing the Same)
[3] Third Embodiment (Fuel Cell Member and Method for Producing the Same)
[4] Fourth Embodiment (Fuel Cell)
[5] Fifth Embodiment (Electricity Storage Device)

### [1] First Embodiment (Catalyst and Method for Producing the Same)

The catalyst according to the present invention includes a base and a carbon catalyst, wherein the base has a conductive region formed in at least a portion thereof, and the carbon catalyst is formed in the conductive region of the base. Such catalyst is configured by forming the carbon catalyst in the base so that catalyst function is provided. The resistance between the base and the carbon catalyst can be dramatically reduced compared with the case where the base and the carbon catalyst are brought into contact with each other simply by attaching the carbon catalyst on the base. Such carbon catalyst can be easily formed by attaching a carbon precursor polymer on the base and then carbonizing the carbon precursor polymer.

The shape of the carbon catalyst formed on the base can be variously changed depending on the material and structure of the base, the condition where the carbon precursor polymer is attached on the base, and the like. The various shapes may include, for example, a shape characterized by point-like tip ends so that the catalyst function is developed by the points; a shape formed by forming a certain level of coat on the surface of the base so that the catalyst function is developed by the surface, and a shape in which two or more positions of the base are joined. The shape can be any as long as electrons can be conducted to the base more efficiently than conventional technologies.

Since the carbonization process needs to be performed after the carbon precursor polymer is attached, it is preferred that the material of the base has a high heat resistance enough to withstand the heat treatment of the carbonization process.
The shape of the base is not particularly limited, and in the case where the base is shaped so that the base has a structure allowing gas to pass therethrough (i.e., so that the base has gas diffusion function), a nonwoven fabric, a woven fabric, a porous body or the like may also be used as the material of the base. Further, a molding may also be used as the base.

Incidentally, in addition to conductive materials, various other materials can be used as the base, no matter these materials are inorganic materials or organic materials. Examples of the conductive material include carbon, metal and the like. Further, in addition to ceramic, mineral (ore) and the like, other materials such as semiconductors, inorganic compound compacts, and inorganic or organic solid materials may be used as the base, as long as these materials have the conductive region formed in a portion of thereof. Examples of the semiconductors include silicon and the like; examples of the inorganic compound compacts include carbide compact, nitride compact, boride compact and the like; examples of the inorganic or organic solid materials include powder, film may and the like.

In the case where the catalyst provided with gas diffusion function is used as a gas diffusion electrode of a fuel cell, commonly used materials such as carbon cloth, carbon paper, carbon porous body, metal porous body, cloth of metallic fiber, paper of metallic fiber and the like may be used as the base (which serves as the gas diffusion electrode). Further, the base may be configured as a nanofiber structure which is spun into fibers by an electrospinning method or the like, or may be a carbonized carbon nanofiber or nonwoven fabric of the carbonized carbon nanofiber.

Further, it is preferred that the carbon catalyst formed in the base contains nitrogen atoms (N) and/or boron atoms (B). Further, it is preferred that the total content of the nitrogen atoms (N) and/or boron atoms (B) contained in the carbon catalyst is within a range of 0.5% to 20% by mass based on the total weight of the carbon catalyst.
Further, it is preferred that the carbon catalyst preferably to be used in the catalyst according to the present invention not only contains nitrogen atom (N) and/or boron atom (B), but also has transition metal or transition metal compound added thereto. Such carbon catalyst can be produced by attaching a carbon precursor polymer, which contains nitrogen atoms (N) and/or boron atoms (B) and has a transition metal or a transition metal compound added thereto, to the base by a method such coating, spraying, electrospinning or the like, and then carbonizing the carbon precursor polymer by heating or the like.

Incidentally, the carbon catalyst of nanoshell structure can be formed on the base by spinning the carbon precursor polymer, which contains nitrogen atoms (N) and/or boron atoms (B) and has a transition metal or a transition metal compound added thereto, into fibers by a spinning method such as a dry spinning method, a wet spinning method, an electrospinning method or the like, and carbonizing the carbon precursor polymer fibers. In such case, carbon particles (nanoshell carbon) of nanoshell structure containing a high concentration of nitrogen atoms (N) are formed due to the catalytic action and the like of the transition metal or the transition metal compound added to the carbon precursor polymer.

Higher catalytic activity will be exhibited in the case where the carbon particles of nanoshell structure are used. The following is considered to be factors contributing to higher catalytic activity. The basic structure of the nanoshell carbon is a structure formed by laminating graphene layers, which are each an aggregation of carbon atoms chemically bonded together through sp²-hybridized orbitals to form a two-dimensional hexagonal network structure. When nitrogen atoms (N) are introduced into the hexagonal network structure in the carbonization process, pyrrole nitrogen atoms, pyridine nitrogen atoms, oxidized nitrogen atoms or graphene substituted nitrogen atoms is coordinated, and defects of the graphene structure caused by chemical bonding of different elements shows catalytic activity. It is considered that the excellent catalytic activity of such catalyst is obtained by increasing surface area by controlling the particle size of the nanoshell carbon to 50 nm or less, preferably to 20 nm or less, more preferably to 10 nm or less, by forming the nanoshell carbon in fibrous shape so as to increase surface area, and further, by making a high concentration of nitrogen atoms (N) exist on the surface of the nanoshell carbon.

It is considered that the miniaturization of the nanoshell structure is realized by controlling the thickness of the graphene layer of the nanoshell carbon to 10 nm or less, and preferably to 5 nm or less. It is considered that the aforesaid thickness of the graphene layer improves bendability of the graphene, and promotes the formation of the nanoshell carbon having smaller particle size. Additionally, due to the improved bendability, the nanoshell carbon used as the carbon catalyst of the present embodiment may show many extremely-strained shapes such as elliptic shape, flat shape, triangular shape and the like, in addition to the spherical shape.

Incidentally, the carbon catalyst used in the catalyst of the present invention may be other than the carbon particles of nanoshell structure.

Next, an example of the method for producing the catalyst of the present embodiment will be described below.
First, a carbon precursor polymer is prepared. The carbon precursor polymer is not particularly limited as long as it is a polymer material capable of being carbonized by thermal curing. Examples of the carbon precursor polymer include polyacrylonitrile (PAN), chelating resin, cellulose, carboxymethyl cellulose, polyvinyl alcohol, polyacrylic acid, polyfurfuryl alcohol, fran resin, phenol resin, phenolformaldehyde resin, melamine resin, pitch, brown coal, polyvinylidene chloride, lignin, coal, biomass, protein, humic acid, polyimide, polyaniline, polypyrrole, polybenzimidazole, polyamide, polyamide-imide, and the like.

Further, the carbon precursor polymer suitable to the present embodiment may be prepared even from a polymer material unsuitable to be carbonized if such polymer material is mixed or copolymerized with a polymer material which prompts cross-linking. For example, acrylonitrile (AN) and methacrylate (MA) can be used to prepare a polyacrylonitrile-polymethacrylic acid copolymer (PAN-co-PMA) by using a known soap-free polymerization method.

It is preferred that the carbon precursor polymer contains nitrogen atoms (N) as a constituent element thereof. Particularly, it is preferred that the carbon precursor polymer contains a high concentration of nitrogen atoms (N) as a constituent element thereof, such as polyacrylonitrile (PAN). It is preferred that the content of the nitrogen atoms (N) contained in the carbon precursor polymer is within a range of 0.01 % to 30% by mass based on the total weight of the carbon catalyst. It is further preferred that the content of the nitrogen atoms (N) contained in the carbon precursor polymer is within a range of 0.5 % to 20% by mass based on the total weight of the carbon catalyst.

Further, for example, in the aforesaid polyacrylonitrile-polymethacrylic acid copolymer (PAN-co-PMA), if the content of PMA exceeds 15 mol%, fusion of fibers with each other will be caused when performing infusibilization treatment, and therefore shape can not be maintained. Further, it is considered that if the content of PAN is high and the content of PMA is low, the carbon catalyst will contain more amount of nitrogen atoms (N), and therefore it is possible to improve activity capacity for oxygen reduction reaction of the carbon catalyst. However, the carbon catalyst produced from a carbon precursor polymer in which the content of PMA is less than 5 mol% has decreased reduction current of oxygen reduction voltammogram which represents activity for oxygen reduction reaction. Thus, in the case where the PAN-co-PMA is used, it is preferred that the content of PMA is within a range of 5 mol% to 15 mol%.

Next, the carbon precursor polymer prepared in the aforesaid manner and a transition metal or a transition metal compound are dissolved in a solvent to prepare a solution. A solvent capable of dissolving the carbon precursor polymer and capable of being applied to a shape-forming process (for example, a fiber-forming process) of the carbon precursor polymer is suitably selected. If the transition metal or transition metal compound can not be dissolved in solvent, it is preferred that a solvent having excellent dispersibility is used.

After the transition metal or transition metal compound is dissolved or dispersed in the solvent, the aforesaid carbon precursor polymer is dissolved in the solvent. Further, the carbon precursor polymer dissolved in the solvent and the transition metal or transition metal compound are kneaded with each other, and thereby the spinning solution is prepared.
For example, in the case where the aforesaid PAN-co-PMA is used as the carbon precursor polymer and cobalt oxide is used as the transition metal compound, at least one substance selected from the following group can be used as the solvent to prepared the homogeneous spinning solution: N,N-dimethylformamide (DMF), 2-Pyrrolidone (NMP), or dimethylsulfoxide (DMSO).

An element belonging to the third to twelfth groups in the fourth period of the periodic table can be used as the transition metal. For example, it is preferred that the transition metal is selected from a group consisting of cobalt (Co), iron (Fe), manganese (Mn), nickel (Ni), copper (Cu), titanium (Ti), chromium (Cr) and zinc (Zn).
Further, a salt, a hydroxide, an oxide, a nitride, a sulfide, a carbide, or a complex of the aforesaid transition metal can be used as the transition metal compound, and it is preferred that, among these substances, a compound selected from a group consisting of cobalt chloride, cobalt oxide, phthalocyanine cobalt, iron chloride, iron oxide and phthalocyanine iron is used as the transition metal compound.

Co, Fe, Mn, Ni, Cu, Ti, Cr, Zn and the compounds thereof are excellent in forming a structure which improves catalytic activity of the carbon catalyst, and among these substances, Co and Fe are particularly excellent in forming a structure suitable for improving catalytic activity.

Incidentally, the aforesaid transition metal or transition metal compound can be produced using a known method such as the method described in, for example, International Publication No. 2007/049549 and Japanese Unexamined Patent Application Publication No. 2007-332436.

Next, the aforesaid solution is coated on at least a portion of the base. In the case where the conductive material is used as the base to configure the gas diffusion electrode having the gas diffusion function, the solution is coated on a portion of the gas diffusion electrode. A common coating method can be employed as the method for coating the aforesaid solution on one surface of the gas diffusion electrode. Examples of the coating method include but not limited to: dipping, spraying, coating with a coater such as a gravure coater, a brush, a resin extruding device, coating by electrospinning, and the like. It is preferred that coat thickness is within a range of 0.01 µm to 2000 µm. This is because good catalytic activity can be obtained by setting the coat thickness in such a range.

Next, in the case where a polymer material with poor thermosetting property is used as the carbon precursor polymer, it is possible to perform an infusibilization treatment on the resin coating film. By performing the infusibilization treatment, the shape of the coated resin can be maintained even at a temperature equal to or higher than the melting point or softening point of the carbon precursor polymer.
The infusibilization treatment is performed by heating to a temperature not higher than the melting point or softening point of the carbon precursor polymer in the air to oxidize and cross-link the carbon precursor polymer. Further, the infusibilization treatment may also be performed by using a known infusibilization method, instead of the aforesaid method. By performing the infusibilization treatment, collapse of shape, fusion of resin and the like caused by melting of the polymer can be prevented when the carbon precursor polymer is subjected to a heat treatment in a carbonization process (which is to be described later).

For example, the infusibilization treatment of the aforesaid PAN-co-PMA is performed by raising the temperature of the coated PAN-co-PMA in the air from room temperature to 150 °C over 30 minutes, then raising the temperature from 150 °C to 220 °C over 2 hours, and then maintaining the temperature at 220 °C for 3 hours.

Next, the infusibilized gas diffusion electrode is carbonized by being heated under a flow of an inert gas such as nitrogen gas, and hold for a predetermined time. The heating temperature is within a range of 300 °C to 1500 °C, and preferably within a range of 400 °C to 1000 °C. This is because if the carbonization temperature is lower than 300 °C, the carbonization of the carbon precursor polymer will be insufficient; while if the carbonization temperature is higher than 1500 °C, the catalyst effect will be reduced. Further, the holding time of the aforesaid heating temperature is within a range of 5 minutes to 180 minutes, and preferably within a range of 20 minutes to 120 minutes. This is because if the holding time is shorter than 5 minutes, it will be impossible to evenly perform the heat treatment on the gas diffusion electrode; while if the holding time exceeds 180 minutes, catalyst performance will be reduced.

Further, in the aforesaid carbon catalyst, it is possible to perform carbon dioxide (CO₂) activation to improve the catalytic activity.
Further, by introducing nitrogen atoms (N), boron atoms (B) and boron nitride (BN) into the carbon catalyst, activity for oxygen reduction reaction of the carbon catalyst can be improved.

Nitrogen atoms (N) can be introduced by using a liquid-phase doping method, a vapor-phase doping method, or a vapor-liquid-phases doping method. For example, the nitrogen atoms (N) can be introduced into the surface of the carbon catalyst by mixing ammonia, melamine, acetonitrile or the like (as a nitrogen source) into the carbon catalyst, and performing a heat treatment on the carbon catalyst by holding the carbon catalyst at a temperature of 550 to 1200 °C for 5 to 180 minutes under an inert gas atmosphere, such as an atmosphere of nitrogen (N₂), argon (Ar), helium (He) or the like.

Further, the boron atoms (B) can be introduced into the carbon catalyst by mixing BF₃-methanol complex or the like (as a boron source) into the carbon catalyst along with the nitrogen source while introducing the aforesaid nitrogen atoms (N) into the carbon catalyst. Further, boron atoms (B) may be introduced into the carbon catalyst by, after the nitrogen atoms (N) having been introduced into the carbon catalyst using the aforesaid method, bringing BCl₃ gas (as a boron source) into contact with the carbon catalyst, or by mixing BF₃-methanol (as a boron source) with the carbon catalyst and then performing a heat treatment on the mixture by holding the temperature at 550 to 1200 °C for 5 to 180 minutes under an inert gas atmosphere, such as an atmosphere of nitrogen (N₂), argon (Ar), helium (He) or the like.

Next, the transition metal or transition metal compound contained in the carbon catalyst is removed by an acid or by performing an electrolytic treatment according to necessity.

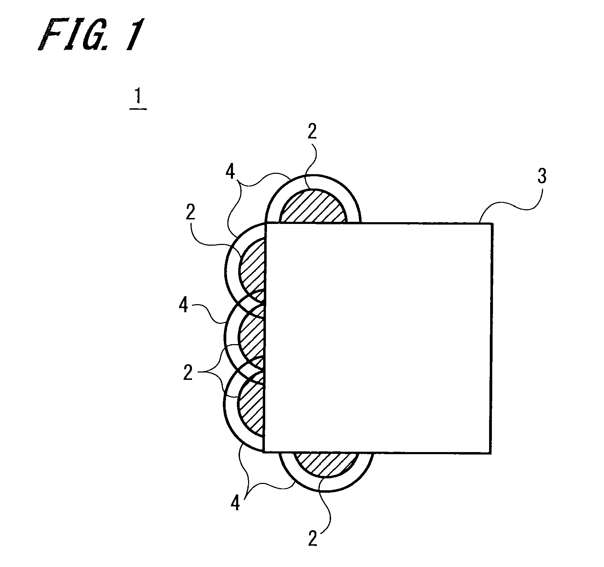

By performing the aforesaid process, as shown in FIG. 1, a catalyst 1 can be produced which is configured by forming carbon catalyst 2 on a base 3. Incidentally, FIG. 1 shows an example in which the carbon catalyst 2 is covered by binder 4 which is formed of solid polyelectrolyte, ionomer or the like. In the case where the binder 4 is provided to cover the carbon catalyst 2 formed on the base 3, when being used as the gas diffusion electrode of fuel cell, the adhesion to a solid electrolyte can be improved.

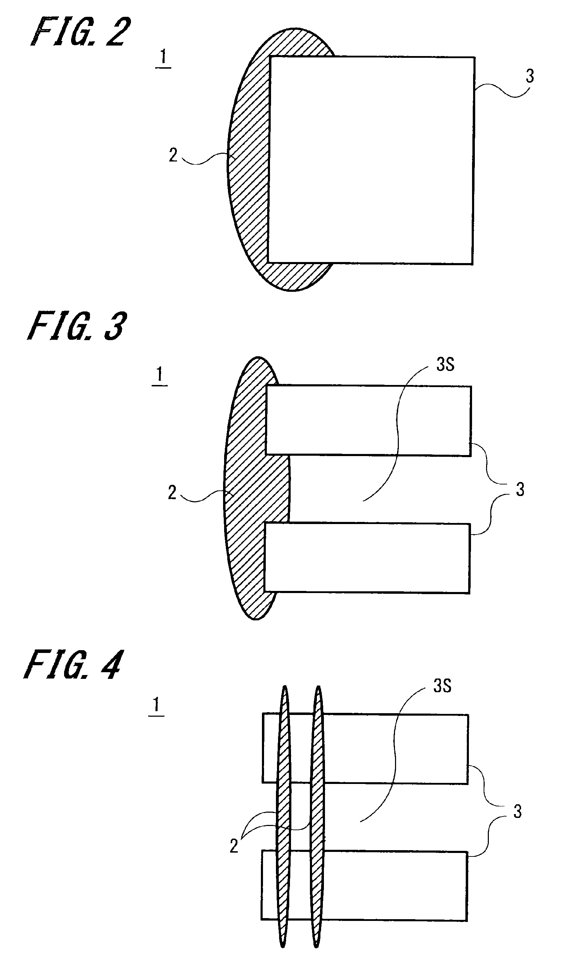

Incidentally, in a first example shown in FIG. 1, the carbon catalyst 2 is clump-shaped and brought close to the base 3 so as to cover one lateral surface of the base 3, however the shape of the base 3 and the shape of the carbon catalyst 2'are not limited in such a manner.
For example, the present invention includes another possible configuration as a second example shown in FIG. 2 in which the carbon catalyst 2 is integrally covered on one lateral surface of the base 3.

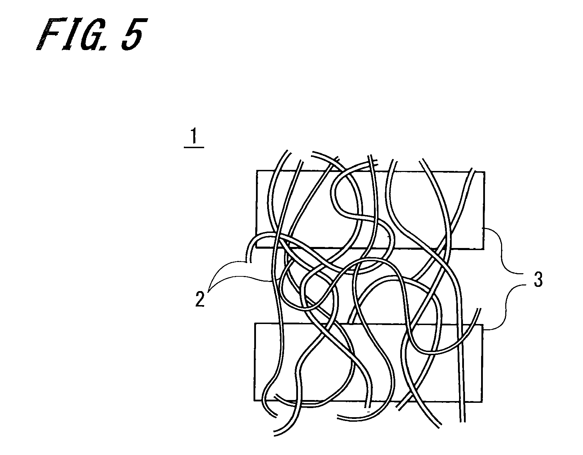

Further, the present invention includes further another possible configuration as a third example shown in FIG. 3 in which a gap 3S for allowing gas to pass therethrough is formed from the surface to the inside of the base 3, and the carbon catalyst 2 is formed to straddle the gap 3S.
Further, the present invention includes further another possible configuration as a fourth example shown in FIG. 4 in which the base 3 is formed with the gap 3S, and the carbon catalyst 2 is formed in a plurality of positions to straddle the base 3. In such case, the positions where the carbon catalyst 2 is formed are not limited to surface of the base 3, but can be inside of the base 3 or both the surface and the inside of the base 3.
Further, the present invention includes further another possible configuration as a fifth example shown in FIG. 5 in which the base 3 is formed of porous body or formed in fibrous structure, and the carbon catalyst 2 is formed in fibrous shape by a spinning method.

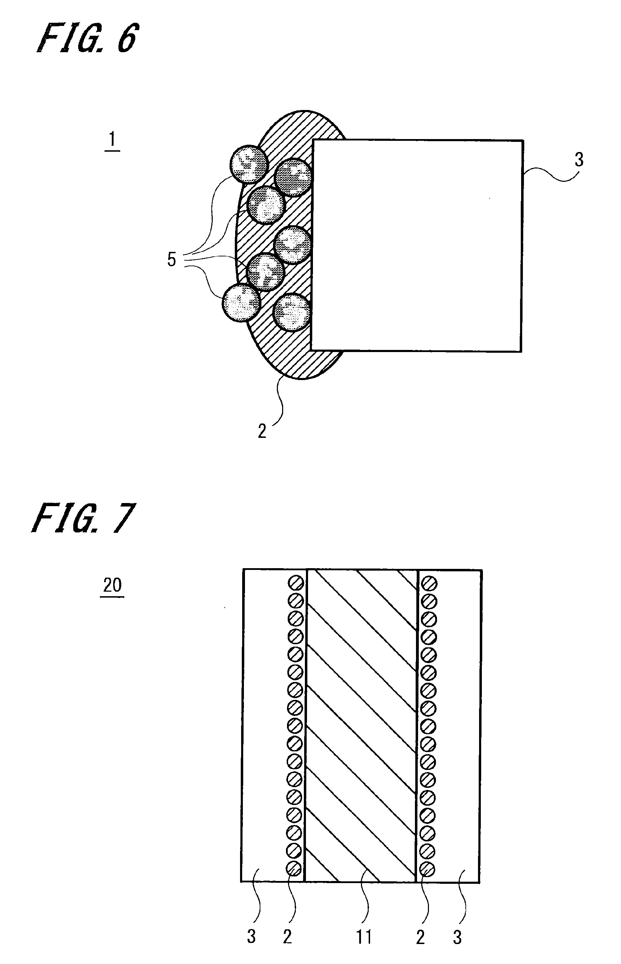

Further, the present invention includes further another possible configuration as a sixth example shown in FIG. 6 in which, in order to improve catalyst function, conductive filler 5 is mixed into the carbon catalyst 2 formed on the base 3. Conductive materials such as carbon nanotube, carbon nanofiber, carbon black, Ketjen black, acetylene black, graphite, activated carbon, glasslike carbon, carbon fiber, metal powder, metal fiber or the like can be used as the conductive filler 5. Also, combination of two or more materials selected from the aforesaid conductive materials can be used as the conductive filler 5.

As a method for mixing the conductive filler 5 into the carbon catalyst 2, the conductive material such as carbon nanotube, carbon nanofiber, carbon black, Ketjen black, acetylene black, graphite, activated carbon, glasslike carbon, carbon fiber, metal powder, metal fiber and/or the like can be mixed into the aforesaid carbon precursor solution, and then the mixture can be coated on the base 3. It is preferred that mixture fraction is 85 % or less by weight based on the carbon precursor solution. This is because if the mixture fraction exceeds 85 %, fluidity of the carbon precursor solution will be extremely reduced and therefore difficult to be coated. Further, the carbon precursor solution can also be coated by a method in which the aforesaid conductive material is previously floured on the region including the position(s) of the base 3 where the carbon catalyst 2 is to be formed, and then the carbon precursor solution is coated over the conductive material.

### [2] Second Embodiment (Membrane Electrode Assembly and Method for Producing the Same)

A membrane electrode structure (MEA) can be obtained by providing gas diffusion function to the base having the carbon catalyst formed therein (as described in the first embodiment) so as to form a gas diffusion electrode, and joining the gas diffusion electrode to at least one surface of a solid electrolyte. FIG. 7 shows an example of the membrane electrode structure. The base 3 having the carbon catalyst 2 formed therein is joined to both surfaces of a solid electrolyte 11, and thereby a membrane electrode structure 20 is configured.

The solid electrolyte can be formed of a known material having ion-exchange function, such as a fluorine-based cation-exchange resin membrane which is represented by a perfluorosulfonic acid resin membrane.
A hot pressing method can be employed as the joining method as long as the temperature and holding time are set within a range so that the base will not be melted.
At this time, as described with reference to FIG. 1, by covering the binder 4 (which are formed of solid polyelectrolyte, ionomer or the like) on the carbon catalyst 2, it is relatively easy to strongly join the base to the solid electrolyte. The joining can be easily performed by pressing with a hot press machine or the like.

### [3] Third Embodiment (Fuel Cell Member and Method for Producing the Same)

A fuel cell member can be configured by providing gas diffusion function to the base having the carbon catalyst formed thereon (as described in the first embodiment) so as to form a gas diffusion electrode and, as a step before joining the gas diffusion electrode to a solid electrolyte, joining the gas diffusion electrode to a separator or providing a separator function to the gas diffusion electrode. By previously producing the fuel cell member and joining two fuel cell members to each other with the solid electrolyte sandwiched therebetween, a fuel cell can be produced by simple steps.

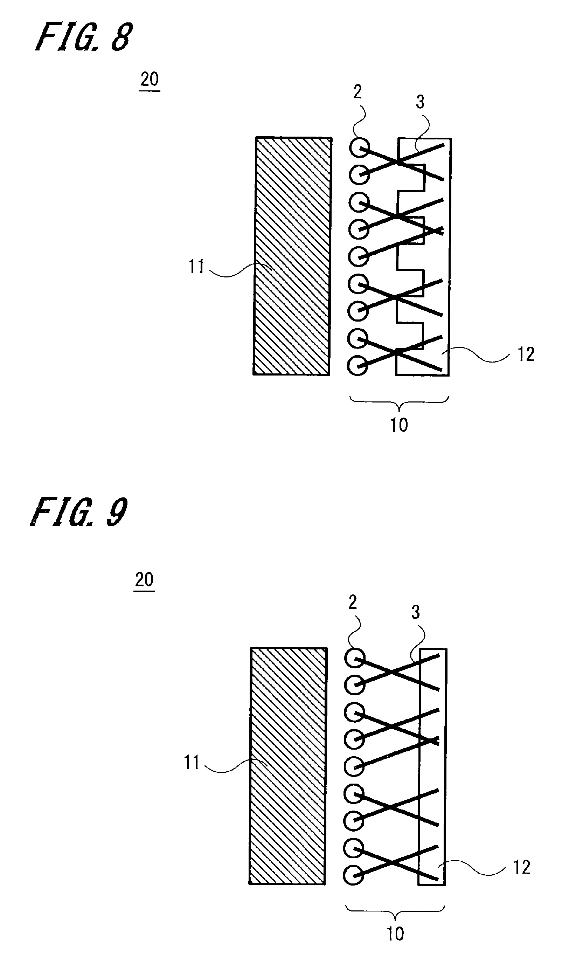

For example, as shown in a schematic configuration of an example of a fuel cell member 10 of FIG. 8, the base 3, whose one side is provided with the carbon catalyst 2 and has catalyst function, is prepared. Further, in addition to the catalyst function, a separator function can be provided to the base (i.e., a separator 12 can be integrally formed) by solidifying the other side (i.e., the side opposite to the side where the carbon catalyst 2 is formed) of the base 3 using, for example, a composite material made from carbon and resin. Thus, by integrating the base 3 (to which the carbon catalyst 2 has been formed) and the separator 12, when being used in a fuel cell, the electrons generated in the catalyst are directly carried to the separator, and therefore it is possible to configure a fuel cell with small resistance.
FIG. 8 shows an example in which the separator 12 is provided with a convexo-concave portion which serves as a gas flow path, and a surface of the base 3 on the other side (i.e., the side opposite to the side where the carbon catalyst 2 is formed) of the base 3 is joined to a convexo-concave surface of the convexo-concave portion. Further, the solid electrolyte 11 is joined to the side where the carbon catalyst 2 is formed, and thereby the fuel cell member is configured.
FIG. 9 shows another example in which the separator 12 has a plate-like shape. In the example shown in FIG. 9, like components are denoted by like reference numerals as of the example shown in FIG. 8 and the explanation thereof will be omitted.

Methods for producing the aforesaid fuel cell member of the present embodiment will be described below.

### [1] First production method

The separator 12 is previously mold. The separator 12 can be produced by molding, for example, a material obtained mixing a resin, a conductive filler and the like. In the case where a resin is used, it is preferred that the resin is a thermoplastic resin capable of withstanding the power generation condition of the fuel cell. Examples of such resin include: polypropylene, polystyrene, syndiotactic polystyrene, ABS resin (acrylonitrile-butadiene-styrene copolymer resin), polybutadiene, PPS (polyphenylene sulfide) resin, PEEK (polyether ether ketone) resin, fluorine-contained resin, fluorine-contained rubber, silicon rubber, EPDM (ethylene propylene) rubber, polycarbodiimide, polyamide and the like.

The resin, the conductive filler and, alternatively, other material are mixed with each other. Carbon black, Ketjen black, acetylene black, carbon fiber, carbon nanofiber, carbon nanotube, graphite, glasslike carbon, metal powder, metal fiber or the like may be used as the conductive filler. These materials are mixed with each other wherein the weight ratio of resin to conductive filler (resin/conductive filler) is in a range of from 5/95 to 75/25. Thereafter, the mixture is mold into the separator 12. The shape of the separator 12 is not limited to the shape shown in FIG. 8 (which is shaped to ensure gas flow path) and the shape shown in FIG. 9 (which has a plate-like shape), but can have other shapes. The separator 12 (which is formed by molding) and the base 3 (which has carbon catalyst 2 formed therein) as described in the first embodiment (i.e., the gas diffusion electrode having catalyst function) are integrally formed by being brought into close contact with each other and heated up to a temperature close to the melt temperature of the resin. By the above process, it is possible to obtain the fuel cell member 10 which has separator function, in addition to the desired catalyst function and gas diffusion function.

### [2] Second production method

A solution for producing the separator 12 is previously prepared. A resin solution having the conductive filler dispersed therein can be used as the solution. A thermosetting resin or a thermoplastic resin may be used as the resin. Such resin needs to be able to withstand the power generation condition of the fuel cell. Examples of such resin include: polypropylene, polystyrene, syndiotactic polystyrene, ABS resin, polybutadiene, PPS resin, PEEK resin, fluorine-contained resin, fluorine-contained rubber, silicon rubber, EPDM rubber, polycarbodiimide, polyamide, phenol resin, epoxy resin, melamine resin, polyester resin and the like.

A material selected from the following group or a mixture obtained by mixing two or more materials selected from the following group can be used as the conductive filler: carbon black, Ketjen black, acetylene black, carbon fiber, carbon nanofiber, carbon nanotube, graphite, glasslike carbon, metal powder, metal fiber or the like. The resin and the conductive filler are mixed with each other wherein the weight ratio of resin to conductive filler (resin/conductive filler) is in a range of from 5/95 to 75/25. Further, the resin solution is coated on one surface of the base 3 (for example, the gas diffusion electrode), which has the carbon catalyst 2 formed therein and has catalyst function, then the base 3 is subjected to a drying treatment and a heat treatment according to necessity so that separator function is provided, and thereby the fuel cell member 10 is formed. The coating can be performed by various known coating method such as dipping, spraying, coating with a brush, coating with a coater such as a gravure coater, or the like.
In the case where the second production method is used, it is possible to perform continuous production and extremely reduce the cost.

### [4] Fourth Embodiment (Fuel Cell)

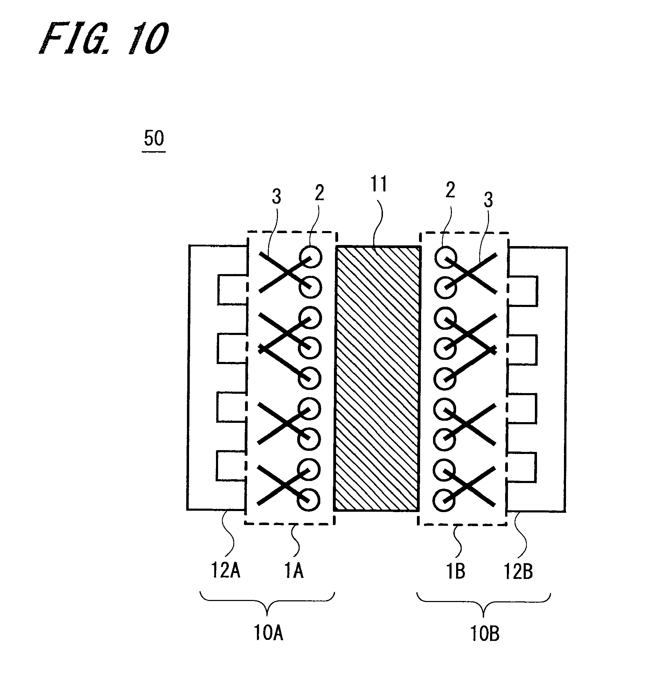

Next, a fuel cell formed by applying the aforesaid catalyst configured by the base having gas diffusion function to the anode and/or cathode thereof will be described below.
A fuel cell 50 shown in FIG. 10 can be obtained by sandwiching the membrane electrode assembly (as shown in FIG. 7) described in the second embodiment between two separators. In the example shown FIG. 10, a gas diffusion electrode 1A and a gas diffusion electrode 1B are respectively joined to both sides, on which the carbon catalyst (not shown in the drawing) is to be formed, of the solid electrolyte 11, and further, the gas diffusion electrodes 1A and 1B are sandwiched by a separator 12A and a separator 12B from out side, wherein the separators 12A and 12B are each shaped so as to have gas path. In such case, the fuel cell may also be configured by a fuel cell member 10A and/or a fuel cell member 10B, where the fuel cell member 10A is formed by integrating the gas diffusion electrode 1A with the separator 12A, and fuel cell member 10B is formed by integrating the gas diffusion electrode 1B with the separator 12B.
Further, since the aforesaid catalyst configured by the base having gas diffusion function can be made in a continuous sheet shape, it is possible to continuously producing the membrane electrode assembly and the fuel cell.
Further, the aforesaid catalyst configured by the base having gas diffusion function may also be used in combination with an electrode that uses a common catalyst such as platinum or the like, as a counter electrode.

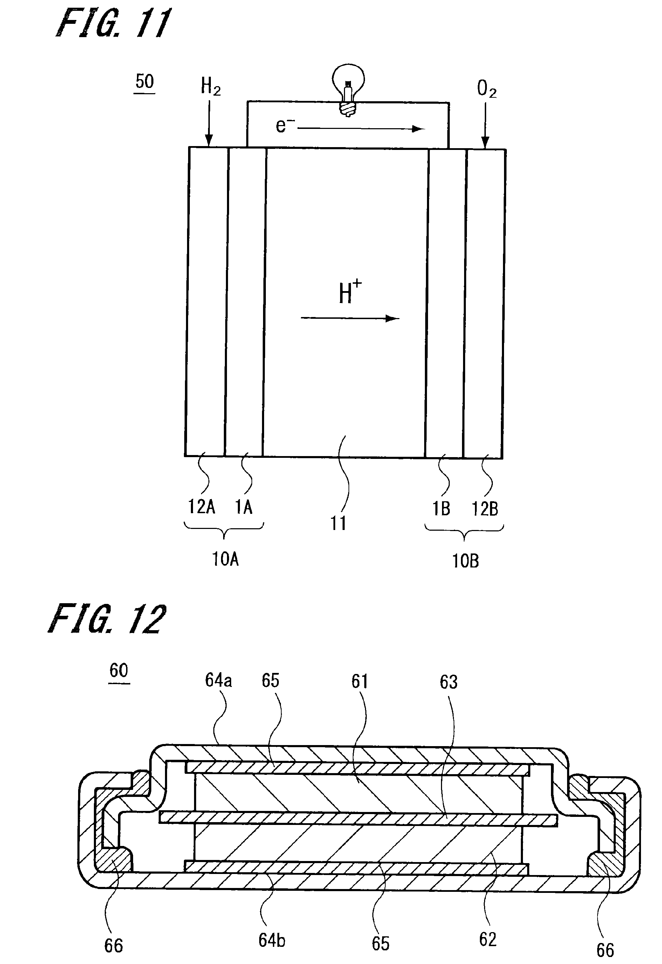

FIG. 11 is a schematic view for explaining power generation state of an example of the fuel cell according to the present embodiment. The fuel cell 50 is configured by sandwiching the solid electrolyte 11 between the gas diffusion electrode 1A and the gas diffusion electrode 1B, and sandwiching the solid electrolyte 11, the gas diffusion electrode 1A and the gas diffusion electrode 1B between the separator 12A and separator 12B from the out side so that all these components are integrated, wherein the gas diffusion electrode 1A serves as an anode catalyst (i.e., a fuel electrode) and the gas diffusion electrode 1B serves as a cathode catalyst (i.e., an oxidant electrode).
The aforesaid fluorine-based cation-exchange resin membrane, which is represented by a perfluorosulfonic acid resin membrane, is used as the solid electrolyte 11.
In such fuel cell, integration can be achieved by sandwiching both surfaces of the aforesaid membrane electrode assembly between the separators 12A and 12B, and bringing the membrane electrode assembly and the separators into close contact by hot pressing or the like.

In a conventional fuel cell, a gas diffusion layer formed by a porous sheet (for example, a carbon paper) is interposed both between the separator and the anode catalyst and between the separator and the cathode catalyst, wherein the gas diffusion layer also functions as a current collector.
In contrast, in the fuel cell according to the present embodiment, the carbon catalyst having a reduced contact resistance between itself and the base is used as the anode catalyst and the cathode catalyst. Particularly, when the carbon catalyst has a nanoshell structure, specific surface area is large and therefore high catalytic activity can be obtained. Due to such configuration, the number of components can be reduced, production cost can be reduced, and also, since the contact resistance between the carbon catalyst and the base (i.e., the gas diffusion electrode) can be reduced, electrical conductivity can be improved, and excellent power generation characteristics can be obtained.

The separators 12A and 12B are also adapted to supply and discharge reaction gases such as fuel gas H₂, oxidizer gas O₂ and the like, in addition to supporting the gas diffusion electrodes 1A and 1B, which are respectively the anode catalyst and the cathode catalyst. Further, when the reaction gases are respectively supplied to the gas diffusion electrode 1A and the gas diffusion electrode 1B, a triphasic interface of a gas phase (the reaction gas), a liquid phase (the solid polyelectrolyte membrane) and a solid phase (the catalyst of the both electrodes) is formed on the border between the carbon catalyst of the both electrodes and the solid electrolyte 11. Further, a DC power is generated due to the occurrence of an electrochemical reaction.
In the aforesaid electrochemical reaction, the following reactions occur on the cathode side and the anode side:
Cathode side (gas diffusion electrode 1B):

   O₂ + 4H⁺ + 4e⁻ → 2H₂O
Anode side (gas diffusion electrode 1A):

   H₂ → 2H⁺ + 2e
The H⁺ ion generated on the anode side moves toward the cathode side through the solid electrolyte 11, and the e⁻, (electron) generated on the anode side moves toward the cathode side through an external load.
While on the cathode side, the oxygen contained in the oxidizer gas is reacted with the H⁺ ion and the e⁻ moved from the anode side to form water. As a result, in the aforesaid fuel cell, DC power is generated from hydrogen and oxygen, and meanwhile water is formed.

### [5] Fifth Embodiment (Electricity Storage Device)

Next, an electricity storage device having an electrode material to which the aforesaid catalyst is applied will be described below.
FIG. 12 is a view showing a schematic configuration of an electric double layer capacitor 60 excellent in electricity storage capacity, as an example of the electricity storage device of the present embodiment.
The electric double layer capacitor 60 shown in FIG. 12 includes a first electrode (a polarized electrode) 61, a second electrode (a polarized electrode) 62, a separator 63, an exterior lid 64a and an exterior case 64b, wherein the first electrode 61 and the second electrode 62 face each other with the separator 63 interposed therebetween, and the exterior lid 64a and exterior case 64b accommodate the first electrode 61, the second electrode 62 and the separator 63. Further, the first electrode 61 and the second electrode 62 are respectively connected to the exterior lid 64a and the exterior case 64b through a current collector 65. Further, the separator 63 is impregnated with an electrolytic solution. Further, the exterior lid 64a and the exterior case 64b are sealed to each other by caulking with a gasket 66 interposed therebetween to electrically-insulate the exterior lid 64a and exterior case 64b from each other, and thereby the electric double layer capacitor 60 is configured.

In the electric double layer capacitor 60 of the present embodiment, the aforesaid base having the carbon catalyst formed therein can be applied to both the first electrode 61 and the second electrode 62. Further, it is possible to configure the electric double layer capacitor having the electrode material to which the carbon catalyst is applied.
Since the contact resistance between the carbon catalyst and the base is reduced, in the capacitor, an electrode interface where charges accumulate can be reliably maintained. Further, since the aforesaid carbon catalyst is electrochemically inactive in the electrolytic solution and has suitable electrical conductivity, by applying the carbon catalyst to the electrodes of the capacitor, capacitance per unit volume of the electrodes can be improved.

Further, similar to the aforesaid capacitor, the aforesaid base having the carbon catalyst formed therein can be applied to other electrodes formed of carbon material, such as negative-electrode material of a lithium-ion secondary battery. Further, when the carbon catalyst has a nanoshell structure as described above, since the specific surface area of the carbon catalyst is large, it is possible to configure a secondary battery with large electricity storage capacity.

Instead of being limited to the aforesaid for examples, the catalyst according to the present invention may also be used as, for example, an alternative to an environmental catalyst containing a noble metal such as platinum. Such example will be described below.
An environmental catalyst configured by a catalyst material formed of a noble metal-based material, such as a platinum-based material, or a compound thereof is used as an exhaust gas purging catalyst for removing contaminated materials (mainly gaseous substances) contained in the contaminated air by performing degradative treatment.
The aforesaid base having the carbon catalyst formed therein can be used as an alternative to the exhaust gas purging catalyst which contains a noble metal such as platinum. In the case where the aforesaid carbon catalyst has nanoshell structure, since catalytic action is more improved, the carbon catalyst has degradation function for degrading material-to-be-treated such as the contaminated material.
Thus, since the noble metal such as platinum is unnecessary to be used to configure the environmental catalyst with the aforesaid catalyst, it is possible to provide a low-cost environmental catalyst. Further, when the carbon catalyst has a nanoshell structure, since the specific surface area is large, treatment area (in which the material-to-be-treated is degraded) per unit volume can be increased, and therefore it is possible to configure an environmental catalyst excellent in degradation function per unit volume.
Incidentally, by carrying a noble metal-based material used in a conventional environmental catalyst, such as a platinum-based material, or a compound thereof by the aforesaid carbon catalyst, it is possible to configure an environmental catalyst more excellent in catalysis such as degradation function and the like.
Incidentally, the environmental catalyst having the aforesaid carbon catalyst may also be used as a purification catalyst for water treatment, in addition to being used as the aforesaid exhaust gas purging catalyst.

Further, the catalyst according to the present invention may also be used as an alternative to various kinds of platinum catalyst. In other words, as an alternative to a generic process catalyst containing noble metal such as platinum used in the chemical industry, the aforesaid catalyst can be used as various kinds of catalyst other than the aforesaid environmental catalyst. With the aforesaid catalyst, it is possible to provide a low-cost chemical reaction process catalyst without using expensive noble metals such as platinum. Further, when the carbon catalyst has a nanoshell structure, since the carbon catalyst has large specific surface area, it is possible to provide a chemical reaction process catalyst excellent in chemical reaction efficiency per unit volume.
Such a carbon catalyst for chemical reactions can be applied to, for example, a catalyst for hydrogenation reaction, a catalyst for dehydrogenation reaction, a catalyst for oxidation reaction, a catalyst for polymerization reaction, a catalyst for reforming reaction, a steam reforming catalyst and the like. To be more specific, the aforesaid catalyst can be applied to various chemical reactions by referring to documents relating to catalysts, such as "Catalyst Preparation (Kodansha), T. Shirasaki and N. Todo, 1975".

The present invention will be described below in detail by giving examples. However it should be understood that the present invention is not limited to the examples below.

### (Example 1)

### [Preparation of gas diffusion electrode having catalyst function]

Acrylonitrile (manufactured by Wako Pure Chemical Industries, Ltd.) 30.93 g, methacrylic acid (manufactured by Wako Pure Chemical Industries, Ltd.) 4.07 g and pure water 300 ml were put into a four-necked flask, and bubbling was conducted for 15 minutes by using nitrogen gas. Next, the flask was immersed into an oil bath to adjust the temperature of the flask to 70 °C. Further, a solution prepared by dissolving 100 mg of potassium peroxydisulfate (manufactured by Wako Pure Chemical Industries, Ltd.) in 50 ml of pure water was injected into the flask, which had been adjusted to 70 °C, and stirred for four hours under a nitrogen gas atmosphere so as to be polymerized. Thereafter, the flask was cooled to obtain a milky-white solution.
Next, the milky-white solution was concentrated, and then the concentrated solution was vacuum-dried at a temperature of 60 °C to obtain about 20 g of polyacrylonitrile-polymethacrylic acid copolymer (PAN-co-PMA).

0.18 g of cobalt oxide (NanoTek®, average particle size 2 nm, manufactured by CI Kasei Co., Ltd) was sufficiently dispersed in 94 g of dimethylformamide (manufactured by Wako Pure Chemical Industries, Ltd.), and then 5.82 g of the aforesaid PAN-co-PMA was dissolved to obtain a solution. At this time, the content of the cobalt oxide was 3% by mass based on the total solid content, and the content of the total solid content was 6% by mass based on the total solution.
A carbon paper (TGP-H-060, manufactured by Toray Industries, Inc.) 2.3 × 2.3 cm² was used as the gas diffusion electrode, and one surface of the carbon paper was coated with the aforesaid resin solution by a spray method.

### [Infusibilization treatment]

Thereafter, the gas diffusion electrode having been coated with the resin solution was set in a forced circulation dryer. Further, in the air, the temperature was raised from room temperature to 150 °C over 30 minutes, then raised from 150 to 220 °C over 2 hours, and then the temperature was held at 220 °C for 3 hours, thereby an infusibilization treatment was completed.

### [Carbonization Process]

First, the gas diffusion electrode having been subjected to the infusibilization treatment was put into a firing furnace to be subjected to nitrogen gas purge for 20 minutes and then the temperature was raised from room temperature to 900 °C over 1.5 hours. Thereafter, the temperature was held at 900 °C for one hour to perform carbonization process, and thereby a gas diffusion electrode having carbon catalyst formed therein was produced.

### [Power generation performance characteristics]

The catalytic surface of the obtained gas diffusion electrode carbon having the carbon catalyst formed therein was coated with 700µL of 5% Nafion® dispersion (manufactured by Aldrich Corporation) using a printing machine. Thereafter, the gas diffusion electrode was dried in a forced circulation dryer at a temperature of 110 °C for 3 hours, and thereby a cathode electrode was produced. Next, an anode electrode having platinum carried on the anode side thereof (TGP-H-060, manufactured by Toray Industries, Inc.) 2.3 × 2.3 cm² was prepared, and Nafion® 112 (trade name, manufactured by DuPont) was prepared as the solid electrolyte membrane. Further, the solid polymer membrane was sandwiched between the gas diffusion electrodes and pressed using a hot press machine at a temperature of 150 °C for 10 minutes, and thereby a MEA (membrane electrode assembly) was produced.
By using the MEA produced by the aforesaid method, a power generation test was performed in which the temperature was raised to 80 °C, hydrogen was flowed into the anode side at 200 ml/min, and oxygen was flowed into the cathode side at 200 ml/min. As a result of the test, open-circuit voltage was 0.79V, a voltage of 0.35 V was obtained when current density was 0.5 A/cm².

### (Comparative Example 1)

### [Preparation of polyacrylonitrile-polymethacrylic acid copolymer (PAN-co-PMA)]

Acrylonitrile (manufactured by Wako Pure Chemical Industries, Ltd.) 30.93 g, methacrylic acid (manufactured by Wako Pure Chemical Industries, Ltd.) 4.07 g and pure water 300 ml were put into a four-necked flask, and bubbling was conducted for 15 minutes by using nitrogen gas. Next, the flask was immersed into an oil bath to adjust the temperature of the flask to 70 °C. Further, a solution prepared by dissolving 100 mg of potassium peroxydisulfate (manufactured by Wako Pure Chemical Industries, Ltd.) in 50 ml of pure water was injected into the flask, which had been adjusted to 70 °C, and stirred for four hours under a nitrogen gas atmosphere so as to be polymerized. Thereafter, the flask was cooled to obtain a milky-white solution.
Next, the milky-white solution was concentrated, and then the concentrated solution was vacuum-dried at a temperature of 60 °C to obtain about 20 g of polyacrylonitrile-polymethacrylic acid copolymer (PAN-co-PMA).

### [Preparation of Cobalt Compound-added PAN-co-PMA Nanofibers]

0.18 g of cobalt oxide (NanoTek®, average particle size 2 nm, manufactured by CI Kasei Co., Ltd) was sufficiently dispersed in 94 g of dimethylformamide (manufactured by Wako Pure Chemical Industries, Ltd.), and then 5.82 g of the aforesaid PAN-co-PMA was dissolved to obtain a spinning solution. At this time, the content of the cobalt oxide was 3% by mass based on the total solid content, and the content of the total solid content was 6% by mass based on the total solution.
The spinning solution was spun using an electrospinning method to obtain a nanofiber nonwoven fabric under conditions of: applied voltage: 25-28 KV; discharge pressure: 3-7 kPa; discharging tip inner diameter: 0.31 mmΦ; and distance between the nozzle and the connector: 0.15-0.20 m.

### [Infusibilization treatment]

The nanofiber nonwoven fabric obtained using the aforesaid method was set into a forced circulation dryer with four edges thereof clipped by clips. Further, in the air, the temperature was raised from room temperature to 150 °C over 30 minutes, then raised from 150 to 220 °C over 2 hours, and then the temperature was held at 220 °C for 3 hours, thereby infusibilization of the nanofiber nonwoven fabric was completed.

### [Carbonization Process]

The nanofiber nonwoven fabric having been subjected to the aforesaid infusibilization process was put into a quartz tube to be subjected to nitrogen gas purge for 20 minutes in an ellipsoidal reflection type infrared gold image furnace and then the temperature was raised from room temperature to 900 °C over 1.5 hours. Thereafter, the temperature was held at 900 °C for one hour, and thereby carbonization process of the nanofiber nonwoven fabric was completed.

### [Crushing Process]

Zirconia balls having a size of 1.5 mmΦ were set in a planetary ball mill (P-7, manufactured by Fritsch) to crush the specimen obtained using the aforesaid method at a rotational speed of 800 rpm for 5 minutes. The crushed specimen was taken out and sieved using a sieve having a mesh size of 105 µm, and the crushed specimen passed through the sieve was the carbon catalyst.

### [Electrode layer: preparation of catalyst dispersion liquid]

723 µL of 5% Nafion® dispersion (manufactured by Aldrich Corporation) was added to 100 mg of the grafted carbon catalyst and subjected to an ultrasonic process for 30 minutes, and then mixed using a mortar and to adjust the viscosity, thereby a catalyst dispersion liquid was obtained.

### [Power generation performance characteristics]

100 mg of the aforesaid catalyst dispersion liquid was coated on the gas diffusion electrode (TGP-H-060, manufactured by Toray Industries, Inc.) 2.3 × 2.3 cm² using a printing machine, and then the gas diffusion electrode was dried in a forced circulation dryer at a temperature of 110 °C for 3 hours, and thereby a cathode electrode was produced. Next, an anode electrode having platinum carried on the anode side thereof (TGP-H-060, manufactured by Toray Industries, Inc.) 2.3 × 2.3 cm² was prepared, and Nafion® 112 (trade name, manufactured by DuPont) was prepared as the solid electrolyte membrane. Further, the solid polymer membrane was sandwiched between the gas diffusion electrodes and pressed using a hot press machine at a temperature of 150 °C for 10 minutes, and thereby a MEA (membrane electrode assembly) was produced.
By using the MEA produced by the aforesaid method, a power generation test was performed in which the temperature was raised to 80 °C, hydrogen was flowed into the anode side at 200 ml/min, and oxygen was flowed into the cathode side at 200 ml/min. As a result of the test, open-circuit voltage was 0.74V, a voltage of 0.17 V was obtained when current density was 0.5 A/cm².

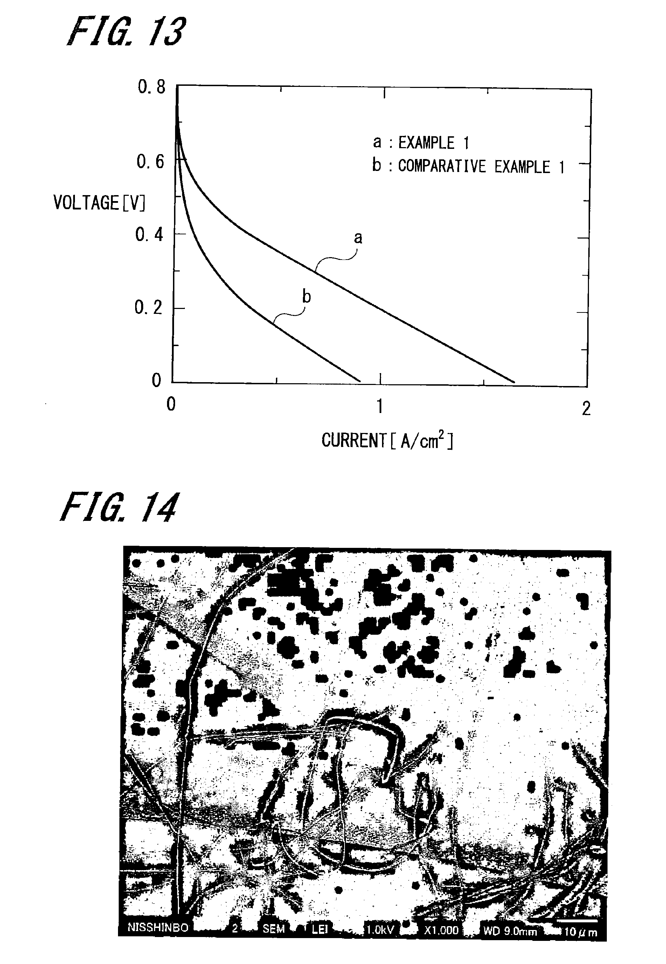

The result of the power generation performance characteristics of Example 1 and the power generation performance characteristics of Comparative Example 1 is shown in FIG. 13. As is clearly known from FIG. 13, compared to Comparative Example 1, relatively high voltage can be obtained in Example 1 when current density is low, and power generation performance is improved.

### (Example 2)

Next, Example 2 will be described below as an example of the fuel cell member configured by forming the carbon catalyst in the base that has gas diffusion function, and further providing separator function to the base.

### [Preparation of separator solution]

100 ml of methanol (manufactured by Wako Pure Chemical Industries, Ltd.) was mixed into 10 g of phenol resin (manufactured by Gun Ei Chemical Industry Co., Ltd.) to prepare a mixed solution. 5 g of Ketjen black EC600JD (trade name, manufactured by Lion Corporation) was added into the aforesaid mixed solution to obtain a carbon/resin mixed solution.

### [Preparation of gas diffusion electrode having catalyst function and separator function]

The aforesaid carbon/resin mixed solution was coated on the gas diffusion electrode having catalyst function prepared in Example 1 on the surface opposite to the catalytic surface using a printing machine. Thereafter, the gas diffusion electrode was put in a dryer for being dried at 60 °C for 100 minutes and at 100 °C for 100 minutes and was subjected to a heat treatment. Thereafter, in order to obtain a denser separator layer, a pressing operation is performed at 180 °C for 5 minutes.

### [Power generation performance characteristics]

The catalytic surface of the obtained gas diffusion electrode having catalyst function and separator function was coated with 700µL of 5% Nafion® dispersion (manufactured by Aldrich Corporation) using a printing machine. Thereafter, the gas diffusion electrode was dried in a forced circulation dryer at a temperature of 110 °C for 3 hours, so that a cathode electrode was produced. Next, an anode electrode having platinum carried on the anode side thereof (TGP-H-060, manufactured by Toray Industries, Inc.) 2.3 × 2.3 cm² was prepared, and Nafion® 112 (trade name, manufactured by DuPont) was prepared as the solid electrolyte membrane. Further, the solid polymer membrane was sandwiched between the gas diffusion electrodes and pressed using a hot press machine at a temperature of 150 °C for 10 minutes.
By using the electrode produced by the aforesaid method, a power generation test was performed in which the temperature was raised to 80 °C, hydrogen was flowed into the anode side at 200 ml/min, and oxygen was flowed into the cathode side at 200 ml/min. As a result of the test, open-circuit voltage was 0.78V, a voltage of 0.36 V was obtained when current density was 0.5 A/cm².

### (Example 3)

### [Preparation of polyacrylonitrile-polymethacrylic acid copolymer (PAN-co-PMA)]

Acrylonitrile (manufactured by Wako Pure Chemical Industries, Ltd.) 30.93 g, methacrylic acid (manufactured by Wako Pure Chemical Industries, Ltd.) 4.07 g and pure water 300 ml were put into a four-necked flask, and bubbling was conducted for 15 minutes by using nitrogen gas. Next, the flask was immersed into an oil bath to adjust the temperature of the flask to 70 °C. Further, a solution prepared by dissolving 100 mg of potassium peroxydisulfate (manufactured by Wako Pure Chemical Industries, Ltd.) in 50 ml of pure water was injected into the flask, which had been adjusted to 70 °C, and stirred for four hours under a nitrogen gas atmosphere so as to be polymerized. Thereafter, the flask was cooled to obtain a milky-white solution.
Next, the milky-white solution was concentrated, and then the concentrated solution was vacuum-dried at a temperature of 60 °C to obtain about 20 g of polyacrylonitrile-polymethacrylic acid copolymer (PAN-co-PMA).

### [Preparation of Cobalt Compound-added PAN-co-PMA Nanofibers]

0.18 g of cobalt oxide (NanoTec®, average particle size 2 nm, manufactured by CI Kasei Co., Ltd) was sufficiently dispersed in 94 g of dimethylformamide (manufactured by Wako Pure Chemical Industries, Ltd.), and then 5.82 g of the aforesaid PAN-co-PMA was dissolved to obtain a spinning solution. At this time, the content of the cobalt oxide was 3% by mass based on the total solid content, and the content of the total solid content was 6% by mass based on the total solution.
The coating was performed by spinning the spinning solution on one surface of a carbon paper (TGP-H-060, manufactured by Toray Industries, Inc.) 2.3 × 2.3 cm² (as the gas diffusion electrode) using an electrospinning method under conditions of: applied voltage: 25-28 KV; discharge pressure: 3-7 kPa; discharging tip inner diameter: 0.31 mmΦ; and distance between the nozzle and the connector: 0.15-0.20 m.

### [Infusibilization treatment]

The nanofiber coated gas diffusion electrode obtained using the aforesaid method was set into a forced circulation dryer with four edges thereof clipped by clips. Further, in the air, the temperature was raised from room temperature to 150 °C over 30 minutes, then raised from 150 to 220 °C over 2 hours, and then the temperature was held at 220 °C for 3 hours, thereby an infusibilization treatment was completed.

### [Carbonization Process]

The gas diffusion electrode having been subjected to the infusibilization treatment by the aforesaid method was put into a firing furnace to be subjected to nitrogen gas purge for 20 minutes and then the temperature was raised from room temperature to 900 °C over 1.5 hours. Thereafter, the temperature was held at 900 °C for one hour to perform carbonization process, and thereby a gas diffusion electrode having catalyst function was produced.
FIG. 14 shows a photomicrograph of the obtained gas diffusion electrode having catalyst function. It is known from FIG. 14 that, in this example, the base is formed of relatively thick fibers and has gas diffusion function, the carbon catalyst is formed of relatively thin fibers and is coiled around the base, so that the carbon catalyst is strongly joined to the base.

### [Power generation performance characteristics]

The catalytic surface of the gas diffusion electrode having catalyst function was coated with 700µL of 5% Nafion® dispersion (manufactured by Aldrich Corporation) using a printing machine. Thereafter, the gas diffusion electrode was dried in a forced circulation dryer at a temperature of 110 °C for 3 hours, so that a cathode electrode was produced. Next, an anode electrode having platinum carried on the anode side thereof (TGP-H-060, manufactured by Toray Industries, Inc.) 2.3 × 2.3 cm² was prepared, and Nafion® 112 (trade name, manufactured by DuPont) was prepared as the solid electrolyte membrane. Further, the solid polymer membrane was sandwiched between the gas diffusion electrodes and pressed using a hot press machine at a temperature of 150 °C for 10 minutes, and thereby a MEA (membrane electrode assembly) was produced.
By using the MEA produced by the aforesaid method, a power generation test was performed in which the temperature was raised to 80 °C, hydrogen was flowed into the anode side at 200 ml/min, and oxygen was flowed into the cathode side at 200 ml/min. As a result of the test, open-circuit viltage was 0.80V, a voltage of 0.36 V was obtained when current density was 0.5 A/cm².

### (Example 4)

### [Preparation of gas diffusion electrode having catalyst function]

Acrylonitrile (manufactured by Wako Pure Chemical Industries, Ltd.) 30.93 g, methacrylic acid (manufactured by Wako Pure Chemical Industries, Ltd.) 4.07 g and pure water 300 ml were put into a four-necked flask, and bubbling was conducted for 15 minutes by using nitrogen gas. Next, the flask was immersed into an oil bath to adjust the temperature of the flask to 70 °C. Further, a solution prepared by dissolving 100 mg of potassium peroxydisulfate (manufactured by Wako Pure Chemical Industries, Ltd.) in 50 ml of pure water was injected into the flask, which had been adjusted to 70 °C, and stirred for four hours under a nitrogen gas atmosphere so as to be polymerized. Thereafter, the flask was cooled to obtain a milky-white solution.
Next, the milky-white solution was concentrated, and then the concentrated solution was vacuum-dried at a temperature of 60 °C to obtain about 20 g of polyacrylonitrile-polymethacrylic acid copolymer (PAN-co-PMA).
0.18 g of cobalt oxide (NanoTek®, average particle size 2 nm, manufactured by CI Kasei Co., Ltd) was sufficiently dispersed in 94 g of dimethylformamide (manufactured by Wako Pure Chemical Industries, Ltd.), and then 5.82 g of the aforesaid PAN-co-PMA was dissolved to obtain a spinning solution. At this time, the content of the cobalt oxide was 3% by mass based on the total solid content, and the content of the total solid content was 6% by mass based on the total solution.

### [Adding conductive filler]

10% by mass of Ketjen black EC600JD (trade name, manufactured by Lion Corporation) was added into the aforesaid mixed solution to obtain a carbon mixed solution.
A carbon paper (TGP-H-060, manufactured by Toray Industries, Inc.) 2.3 × 2.3 cm² was used as the gas diffusion electrode, and one surface of the carbon paper was coated with the aforesaid resin solution by a printing machine.

### [Infusibilization treatment]

Thereafter, the gas diffusion electrode having been coated with the resin solution was set in a forced circulation dryer. Further, in the air, the temperature was raised from room temperature to 150 °C over 30 minutes, then raised from 150 to 220 °C over 2 hours, and then the temperature was held at 220 °C for 3 hours, thereby an infusibilization treatment was completed.

### [Carbonization Process]

The gas diffusion electrode having been subjected to the infusibilization treatment was put into a firing furnace to be subjected to nitrogen gas purge for 20 minutes and then the temperature was raised from room temperature to 900 °C over 1.5 hours. Thereafter, the temperature was held at 900 °C for one hour to perform carbonization process, and thereby a gas diffusion electrode having carbon catalyst formed therein was produced.

### [Power generation performance characteristics]

The catalytic surface of the obtained gas diffusion electrode having catalyst function was coated with 700µL of 5% Nafion® dispersion (manufactured by Aldrich Corporation) using a printing machine. Thereafter, the gas diffusion electrode was dried in a forced circulation dryer at a temperature of 110 °C for 3 hours, so that a cathode electrode was produced. Next, an anode electrode having platinum carried on the anode side thereof (TGP-H-060, manufactured by Toray Industries, Inc.) 2.3 × 2.3 cm² was prepared, and Nafion® 112 (trade name, manufactured by DuPont) was prepared as the solid electrolyte membrane. Further, the solid polymer membrane was sandwiched between the gas diffusion electrodes and pressed using a hot press machine at a temperature of 150 °C for 10 minutes, and thereby a MEA (membrane electrode assembly) was produced.
By using the MEA produced by the aforesaid method, a power generation test was performed in which the temperature was raised to 80 °C, hydrogen was flowed into the anode side at 200 ml/min, and oxygen was flowed into the cathode side at 200 ml/min. As a result of the test, open-circuit voltage was 0.78V, a voltage of 0.35 V was obtained when current density was 0.5 A/cm².

### (Example 5)

### [Preparation of gas diffusion electrode]

### [Preparation of polyacrylonitrile-polymethacrylic acid copolymer (PAN-co-PMA)]

Acrylonitrile (manufactured by Wako Pure Chemical Industries, Ltd.) 30.93 g, methacrylic acid (manufactured by Wako Pure Chemical Industries, Ltd.) 4.07 g and pure water 300 ml were put into a four-necked flask, and bubbling was conducted for 15 minutes by using nitrogen gas. Next, the flask was immersed into an oil bath to adjust the temperature of the flask to 70 °C. Further, a solution prepared by dissolving 100 mg of potassium peroxydisulfate (manufactured by Wako Pure Chemical Industries, Ltd.) in 50 ml of pure water was injected into the flask, which had been adjusted to 70 °C, and stirred for four hours under a nitrogen gas atmosphere so as to be polymerized. Thereafter, the flask was cooled to obtain a milky-white solution.
Next, the milky-white solution was concentrated, and then the concentrated solution was vacuum-dried at a temperature of 60 °C to obtain about 20 g of polyacrylonitrile-polymethacrylic acid copolymer (PAN-co-PMA).
Such resin was sufficiently dispersed in 94 g of dimethylformamide (manufactured by Wako Pure Chemical Industries, Ltd.), and then 5.82 g of the aforesaid PAN-co-PMA was dissolved to obtain a spinning solution. The spinning solution was spun using an electrospinning method to obtain a nanofiber nonwoven fabric under conditions of: applied voltage: 25-28 KV; discharge pressure: 3-7 kPa; discharging tip inner diameter: 0.31 mmΦ; and distance between the nozzle and the connector: 0.15-0.20 m.

The nanofiber nonwoven fabric obtained using the aforesaid method was set into a forced circulation dryer with four edges thereof clipped by clips. Further, in the air, the temperature was raised from room temperature to 150 °C over 30 minutes, then raised from 150 to 220 °C over 2 hours, and then the temperature was held at 220 °C for 3 hours, thereby infusibilization of the nanofiber nonwoven fabric was completed.
The nanofiber nonwoven fabric having been subjected to the infusibilization treatment by the aforesaid method was put into a firing furnace to be subjected to argon gas purge for 20 minutes and then the temperature was raised from room temperature to 2950 °C over 12 hours. Thereafter, the temperature was held at 2950 °C for one hour, and thereby a gas diffusion electrode of nanofiber nonwoven fabric was produced.

### [Preparation of gas diffusion electrode having catalyst function]

Acrylonitrile (manufactured by Wako Pure Chemical Industries, Ltd.) 30.93 g, methacrylic acid (manufactured by Wako Pure Chemical Industries, Ltd.) 4.07 g and pure water 300 ml were put into a four-necked flask, and bubbling was conducted for 15 minutes by using nitrogen gas. Next, the flask was immersed into an oil bath to adjust the temperature of the flask to 70 °C. Further, a solution prepared by dissolving 100 mg of potassium peroxydisulfate (manufactured by Wako Pure Chemical Industries, Ltd.) in 50 ml of pure water was injected into the flask, which had been adjusted to 70 °C, and stirred for four hours under a nitrogen gas atmosphere so as to be polymerized. Thereafter, the flask was cooled to obtain a milky-white solution.
Next, the milky-white solution was concentrated, and then the concentrated solution was vacuum-dried at a temperature of 60 °C to obtain about 20 g of polyacrylonitrile-polymethacrylic acid copolymer (PAN-co-PMA).

0.18 g of cobalt oxide (NanoTek®, average particle size 2 nm, manufactured by CI Kasei Co., Ltd) was sufficiently dispersed in 94 g of dimethylformamide (manufactured by Wako Pure Chemical Industries, Ltd.), and then 5.82 g of the aforesaid PAN-co-PMA was dissolved to obtain a solution. At this time, the content of the cobalt oxide was 3% by mass based on the total solid content, and the content of the total solid content was 6% by mass based on the total solution.
The carbon nanofiber nonwoven fabric produced in the aforesaid manner was used as the gas diffusion electrode, and the aforesaid resin solution was coated by a spray method on one surface of the gas diffusion electrode.

### [Infusibilization treatment]

Thereafter, the gas diffusion electrode having been coated with the resin solution was set in a forced circulation dryer. Further, in the air, the temperature was raised from room temperature to 150 °C over 30 minutes, then raised from 150 to 220 °C over 2 hours, and then the temperature was hold at 220 °C for 3 hours, thereby infusibilization treatment was completed.

### [Carbonization Process]

The gas diffusion electrode having been subjected to the infusibilization treatment was put into a firing furnace to be subjected to nitrogen gas purge for 20 minutes and then the temperature was raised from room temperature to 900 °C over 1.5 hours. Thereafter, the temperature was held at 900 °C for one hour to perform carbonization process, and thereby a gas diffusion electrode having catalyst function was produced.

### [Power generation performance characteristics]

The catalytic surface of the obtained gas diffusion electrode having catalyst function was coated with 700µL of 5% Nafion® dispersion (manufactured by Aldrich Corporation) using a printing machine. Thereafter, the gas diffusion electrode was dried in a forced circulation dryer at a temperature of 110 °C for 3 hours, so that a cathode electrode was produced. Next, an anode electrode having platinum carried on the anode side thereof (TGP-H-060, manufactured by Toray Industries, Inc.) 2.3 × 2.3 cm² was prepared, and Nafion® 112 (trade name, manufactured by DuPont) was prepared as the solid electrolyte membrane. Further, the solid polymer membrane was sandwiched between the gas diffusion electrodes and pressed using a hot press machine at a temperature of 150 °C for 10 minutes, and thereby a MEA (membrane electrode assembly) was produced.
By using the MEA produced by the aforesaid method, a power generation test was performed in which the temperature was raised to 80 °C, hydrogen was flowed into the anode side at 200 ml/min, and oxygen was flowed into the cathode side at 200 ml/min. As a result of the test, open-circuit voltage was 0.80V, a voltage of 0.36 V was obtained when current density was 0.5 A/cm².

It should be understood that the present invention is not limited to the aforesaid configurations, but includes various other configurations without departing from the spirit of the present invention.

### Explanation of Reference Numerals

- 1: catalyst
- 1A, 1B: gas diffusion electrode
- 2: carbon catalyst
- 3: base
- 4: binder
- 5: conductive filler
- 10, 10A, 10B: fuel cell member
- 11: solid electrolyte
- 12, 12A, 12B: separator
- 50: fuel cell
- 12, 12A, 12B: separator
- 60: electric double layer capacitor
- 61: first electrode
- 62: second electrode
- 63: separator
- 64a,: exterior lid
- 64b: exterior case
- 65: current collector
- 66: gasket

## Claims

1. A catalyst comprising:
a base having a conductive region arranged in at least a portion thereof; and
a carbon catalyst formed in the conductive region.

2. The catalyst according to claim 1, wherein the base is formed of a conductive material.

3. The catalyst according to claim 1 or 2, wherein the base has, in at least a portion thereof, a structure allowing gas to pass therethrough.

4. The catalyst according to any one of claims 1 to 3, wherein the base is a molding.

5. The catalyst according to any one of claims 1 to 4, wherein the base is formed of at least one material of carbon, a metal, an inorganic material, a resin, or a combination thereof.

6. The catalyst according to any one of claims 1 to 5, wherein the carbon catalyst contains nitrogen atoms and/or boron atoms.

7. The catalyst according to claim 6, wherein the total content of the nitrogen atoms and/or boron atoms contained in the carbon catalyst is within a range of 0.5% to 20% by mass based on the total weight of the carbon catalyst.

8. The catalyst according to any one of claims 1 to 7, wherein the carbon catalyst contains a transition metal or a compound of the transition metal.

9. The catalyst according to claim 8, wherein the transition metal is at least one material selected from the group consisting of cobalt (Co), iron (Fe), manganese (Mn), nickel (Ni), copper (Cu), titanium (Ti), chromium (Cr), and zinc (Zn).

10. The catalyst according to claim 6, wherein the compound of the transition metal is at least one material selected from the group consisting of cobalt chloride, cobalt oxide, phthalocyanine cobalt, iron chloride, iron oxide and phthalocyanine iron.

11. A method for producing a catalyst comprising the steps of:
preparing a carbon precursor polymer;
attaching the carbon precursor polymer to a conductive region of a base; and
carbonizing the carbon precursor polymer.

12. The method for producing the catalyst according to claim 11, further comprising the step of:
molding the base.

13. The method for producing the catalyst according to claim 11 or 12, wherein the carbon precursor polymer is a polymer compound containing nitrogen atoms and/or boron atoms.

14. The method for producing the catalyst according to any one of claims 11 to 13, wherein the whole or a part of the carbon precursor polymer contains polyacrylonitrile or a copolymer thereof.

15. The method for producing the catalyst according to any one of claims 11 to 14, further comprising the step of:
mixing a transition metal or a compound of the transition metal into the carbon precursor polymer.

16. The method for producing the catalyst according to claim 15, wherein the transition metal is at least one material selected from the group consisting of cobalt (Co), iron (Fe), manganese (Mn), nickel (Ni), copper (Cu), titanium (Ti), chromium (Cr), and zinc (Zn).

17. The method for producing the catalyst according to claim 15, wherein the compound of the transition metal is at least one material selected from the group consisting of a chloride, an oxide, an organic material and an organic complex.

18. The method for producing the catalyst according to claim 15, wherein the compound of the transition metal is at least one material selected from the group consisting of cobalt chloride, cobalt oxide, phthalocyanine cobalt, iron chloride, iron oxide and phthalocyanine iron.

19. The method for producing the catalyst according to any one of claims 11 to 18, wherein, in the step of carbonizing the carbon precursor polymer, a heat treatment is performed at a temperature from 300 °C to 1500 °C.

20. The method for producing the catalyst according to any one of claims 11 to 19, further comprising a step of introducing at least one of nitrogen and boron after the step of carbonizing the carbon precursor polymer.

21. A membrane electrode assembly comprising:
a solid electrolyte; and
a pair of gas diffusion electrodes facing each other with the solid electrolyte sandwiched therebetween,
wherein each of the gas diffusion electrodes has a carbon catalyst formed in at least a part thereof.

22. A method for producing a membrane electrode assembly comprising the steps of:
preparing a carbon precursor polymer;
attaching the carbon precursor polymer to at least a portion of a gas diffusion electrode;
carbonizing the carbon precursor polymer; and
integrating a solid electrolyte and the gas diffusion electrode having the carbon catalyst formed therein.

23. A fuel cell member comprising:
a gas diffusion electrode configured by forming a carbon catalyst in at least a portion of a base; and
a separator,
wherein the gas diffusion electrode and the separator are integrally formed.

24. A method for producing a fuel cell member comprising the steps of:
preparing a carbon precursor polymer;
attaching the carbon precursor polymer to at least a portion of a base which constitutes a gas diffusion electrode;
carbonizing the carbon precursor polymer so as to form a carbon catalyst; and
integrating the base and a separator while leaving at least a part of the portion having the carbon precursor polymer formed therein open.

25. A fuel cell comprising:
a solid electrolyte; and
a pair of gas diffusion electrodes facing each other with the solid electrolyte sandwiched therebetween,
wherein a carbon catalyst is formed in each of the gas diffusion electrodes on the side where the gas diffusion electrode faces the solid electrolyte.

26. The fuel cell according to claim 25, wherein a separator is integrally formed with each of the gas diffusion electrodes on a side opposite to the side where the carbon catalyst is formed.

27. An electricity storage device comprising:
an electrode material; and
an electrolyte,
wherein the electrode material is provided with a carbon catalyst.
